# EUROPÄISCHE PATENTSCHRIFT

(11) **EP 1 211 165 B1**
(45) Veröffentlichungstag und Bekanntmachung des Hinweises auf die Patenterteilung: **15.09.2004**
(21) Anmeldenummer: 01125613.8
(22) Anmeldetag: 26.10.2001
(51) Int. Cl.: B62D 25/20

(54) **Fahrzeug mit einer Bodenaufbaustruktur**
Vehicle with a floor structure
Véhicule avec une structure de plancher

(30) Priorität: 01.12.2000 DE 10059912
(43) Veröffentlichungstag der Anmeldung: 05.06.2002
(73) Patentinhaber: Dr.Ing. h.c.F. Porsche Aktiengesellschaft, 70435 Stuttgart (DE)
(72) Erfinder: Wolkersdorfer, Werner, 75242 Neuhausen (DE); Burgers, Christian, 71296 Heimsheim (DE)

(56) Entgegenhaltungen:
- EP-A- 0 915 006
- DE-A- 3 813 455
- US-A- 5 611 593
- US-A- 6 015 183
- PATENT ABSTRACTS OF JAPAN vol. 1998, no. 13, 30. November 1998 (1998-11-30) -& JP 10 203423 A (MAZDA MOTOR CORP), 4. August 1998 (1998-08-04)

## Beschreibung

Die Erfindung bezieht sich auf ein Fahrzeug mit einer Bodenaufbaustruktur nach dem Oberbegriff des Anspruchs 1.

Aus der DE 38 13 455 C2 ist eine Bodenaufbaustruktur für eine Fahrzeugkarosserie bekannt, welche eine vordere und eine hintere Bodenplatte umfaßt, wobei in die vordere Bodenplatte ein längsverlaufender Mitteltunnel integriert ist. Die Verbindung der beiden Bodenplatten erfolgt mittels winkelförmiger und in Querrichtung des Fahrzeugs verlaufender Abstellungen an den Bodenplatten, die miteinander verbunden werden und einen Hohlträger bilden. Aus der JP 10 20 34 23 ist ein Fahrzeug mit einer Bodenaufbaustruktur und einer querverlaufenden Hohlträgereinheit bekannt, welche sich aus zwei profilierten Trägerteilen sowie aus einem Teil eines Bodenbleches zusammensetzt. Die Hohlträgereinheit umfaßt zwei Kammern, die einerseits zwischen den beiden Trägerteilen und andererseits zwischen dem Bodenblech und einem Trägerteil gebildet werden.

Aufgabe der Erfindung ist es, eine Verbindung zwischen einem hinteren und vorderen Bodenblech einer Bodenaufbaustruktur eines Kraftfahrzeugs zu schaffen, welche eine optimale Torsionssteifigkeit der Bodenstruktur bewirkt, wobei die Verbindung zwischen den Bodenteilen insgesamt einfach zu fertigen und montierbar ausgebildet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß neben einer erzielten hohen Torsionssteifigkeit der Bodenaufbaustruktur zudem bei einem Frontcrash eine günstige Krafteinleitung in die angrenzende Aufbaustruktur erfolgt. Dies wird in vorteilhafter Weise dadurch erzielt, indem die Verbindungselemente des vorderen und hinteren Bodenblechs eine querverlaufende Hohlträgereinheit der Bodenaufbaustruktur bilden und ein zwischen dem Mitteltunnel und der Hohlträgereinheit angeordnetes Tunnelsegment mit seinem einen freien Ende in der Hohlträgereinheit und mit seinem anderen abgekehrten freien Ende im Mitteltunnel gehalten wird. Diese Hohlträgereinheit bildet durch die Verbindungselemente mehrere voneinander abgetrennte Kammern.

Damit in vorteilhafter Weise eine stabile Verbindungseinheit zwischen den beiden Bodenblechen vorne und hinten gebildet wird, besteht die Hohlträgereinheit aus einer unterhalb der Bodenaufbaustruktur bzw. eines hintenliegenden Bodenbleches angeordnetem winkelförmigen Fersenblech mit einem in der Längsmittenebene des Mitteltunnels angeordnetem, vorgezogenen und profilierten Halteabschnitt und einem oberhalb des Bodenbleches angeordneten weiteren winkelförmigen Fersenbleches wobei die Fersenbleche sowohl über Abstellungen mit der Bodenaufbaustruktur als auch miteinander verbindbar sind.

Zur formschlüssigen Zentrierung zwischen dem Tunnelsegment und dem unteren Fersenblech ist in vorteilhafter Weise vorgesehen, daß das Tunnelsegment aus einem im Querschnitt U-förmigen Profil mit einem im Steg angeordneten herausrausragenden U-Profil besteht und das Segment einen winkelförmigen Ausschnitt mit Befestigungslaschen an den Schenkeln und an der Stirnfläche zum untenliegenden Fersenblech aufweist. Hierdurch wird erreicht, daß der vorgezogene profilierte Halteabschnitt des unteren Fersenbleches eine der Profilierung des Tunnelsegments entsprechende Profilierung aufweist und formschlüssig innerhalb des Tunnelsegments anzuordnen ist.

Zwischen dem Fersenblech bzw. dem Fersenblech und dem Bodenblech ergeben sich partiell Hohlträger, die der Verbindung eine relativ große Steifigkeit vorzugsweise in Querrichtung verleihen und somit einer Torsion der Bodenaufbaustruktur entgegengewirkt wird.

Ein Ausführungsbeispiel der Erfindung ist in den Zeichnungen dargestellt und wird im folgenden näher beschrieben.

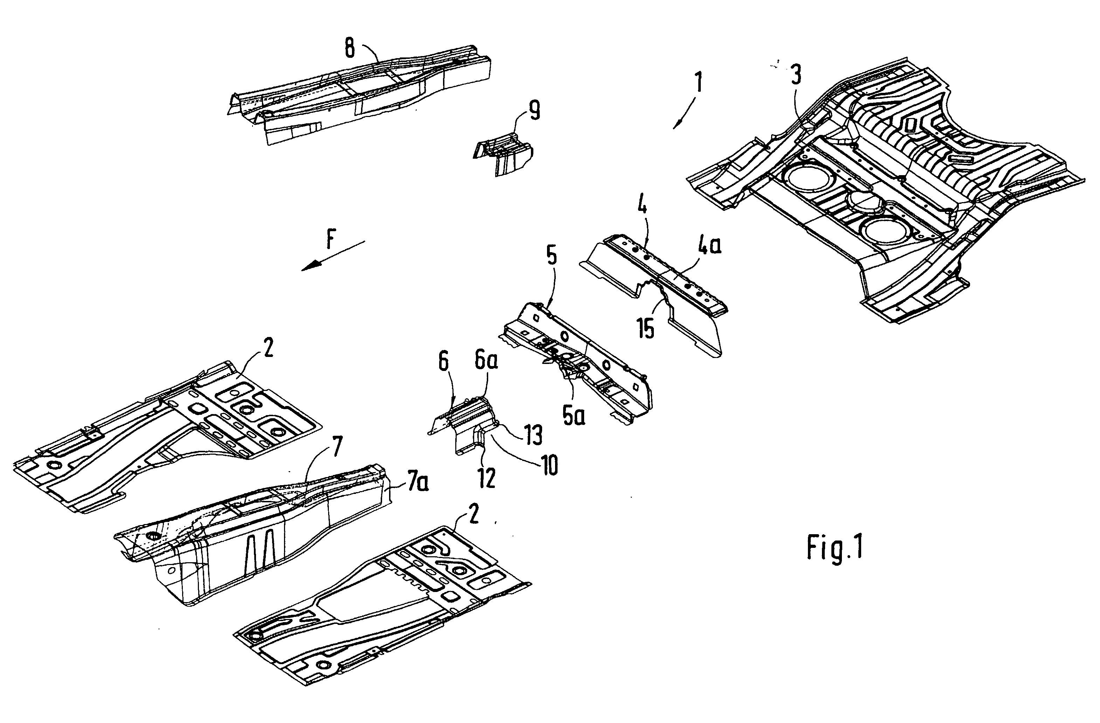

Es zeigen
- Fig. 1: eine schaubildliche Darstellung einer Bodenaufbaustruktur mit Hohlträgereinheit und Verbindungselementen,

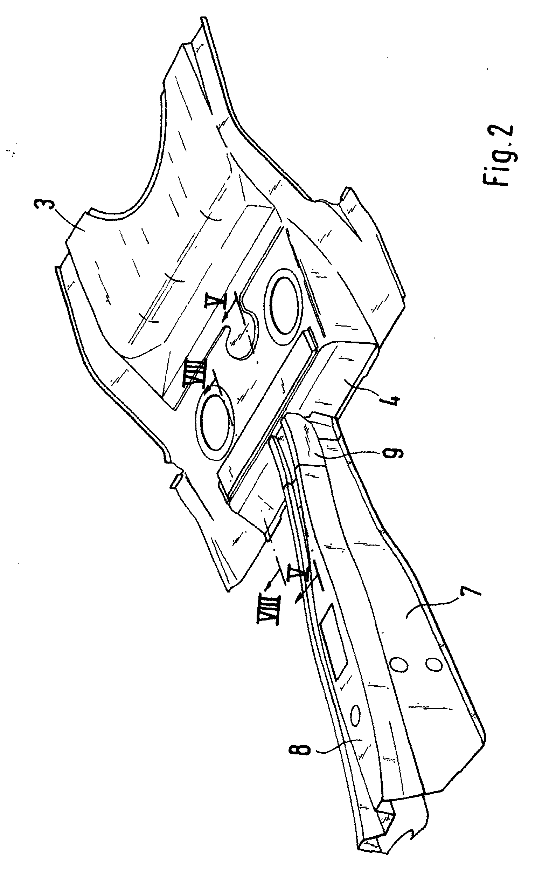

- Fig. 2: eine Darstellung des mit dem hinteren Bodenblech verbundenen Mitteltunnels,

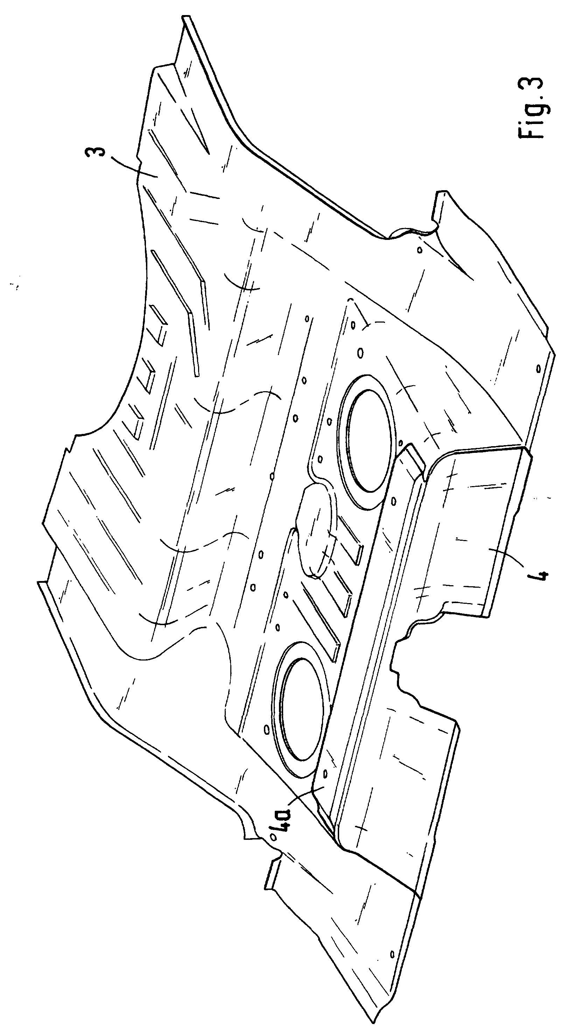

- Fig. 3: eine Einzelheit eines obenliegenden Fersenbleches mit hinterem Bodenblech,
- Fig. 4: eine Einzelheit des unteren Fersenbleches mit Tunnelsegment und Mitteltunnel,

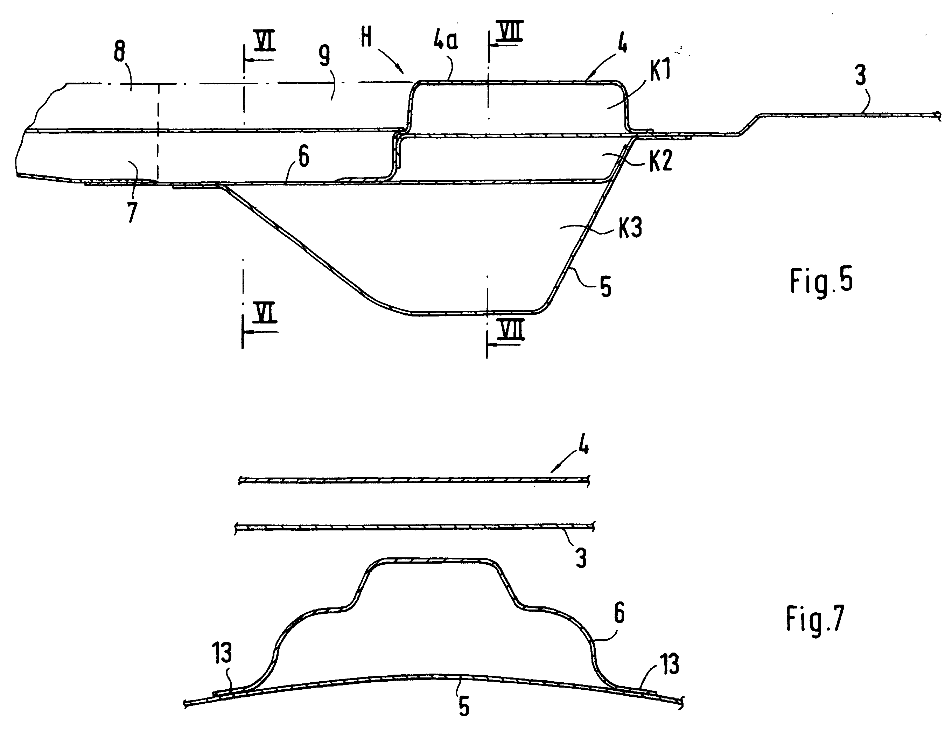

- Fig. 5: einen Schnitt aus der Linie V-V der Fig. 2,

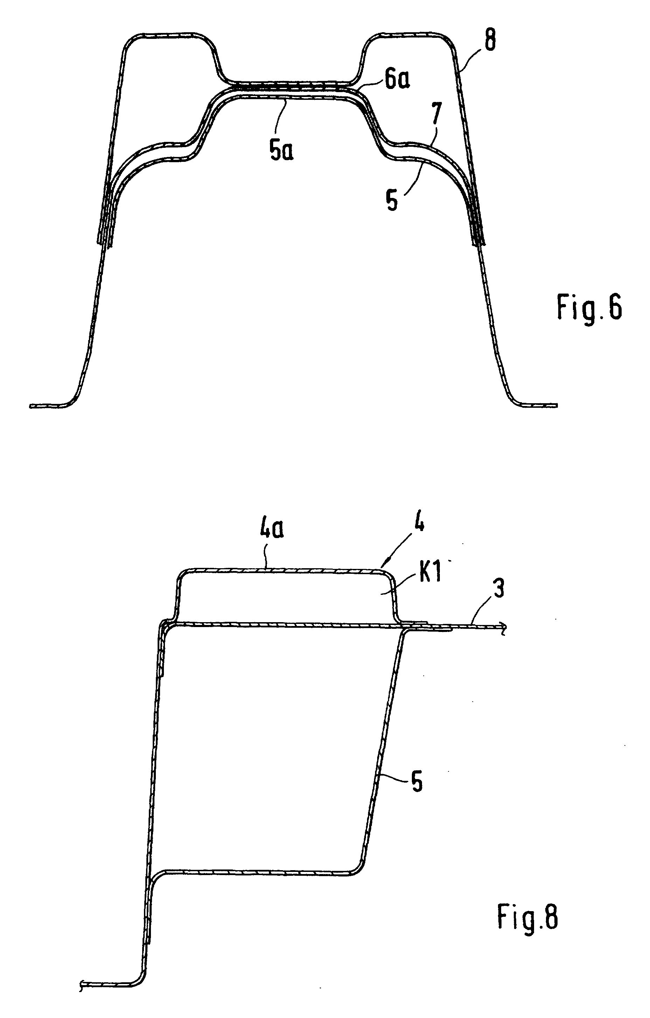

- Fig. 6: einen Schnitt nach der Linie VI-VI der Fig. 5,
- Fig. 7: einen Schnitt nach der Linie VII-VII der Fig. 5 und
- Fig. 8: einen Schnitt nach der Linie VIII-VIII der Fig. 2.

Eine Bodenaufbaustruktur 1 eines Kraftfahrzeugs umfaßt im wesentlichen ein in Fahrtrichtung F gesehen, vorderes Bodenblech 2 und ein hinteres Bodenblech 3. Diese Bodenbleche 2 und 3 sind über Verbindungselemente 4, 5 und 6 miteinander verbunden. Das vordere Bodenblech 2 weist einen sich in Fahrzeuglängsrichtung erstreckenden Mitteltunnel 7 mit aufgesetzter Tunnelverstärkung 8 und mit einer Tunnelanschlußverstärkungsteil 9 auf.

Die Verbindungselemente bestehen im wesentlichen aus einem im Fahrzeug quer angeordneten innenliegenden Fersenblech 4 und einem außenliegenden Fersenblech 5 sowie einem Tunnelsegment 6.

Das innenliegende Fersenblech 5 besteht aus einem winkelförmigen Blechformteil mit einem vorgezogenen profilierten Halteabschnitt 5a für das Tunnelsegment 6. Das weitere außenliegende Fersenblech 4 besteht ebenfalls aus einem winkelförmigen Blechformteil mit einem in Querschnitt U-förmigen Kopfteil 4a.

Diese Fersenbleche 4, 5 werden mit dem Bodenblech 3 und dem Bodenblech 2 über Abstellungen beispielsweise mittels einer Punktschweißung verbunden und bilden einen querverlaufenden Hohlträger mit mehreren Kammern K1, K2 und K3.

Eine Verbindung zwischen dem Mitteltunnel 7 und dem Bodenblech 3 bzw. dem inneren Fersenblech 5 erfolgt über das Tunnelsegment 6. Dieses Segment 6 weist einen winkelförmigen Ausschnitt 10 auf, der sich an einen Schenkel 11 des Fersenbleches 5 über Laschen 12, 13 abstützt. Stirnseitig ist das Tunnelsegment 6 über weitere Laschen und dergleichen mit dem Schenkel 14 des Fersenbleches 5 verbunden.

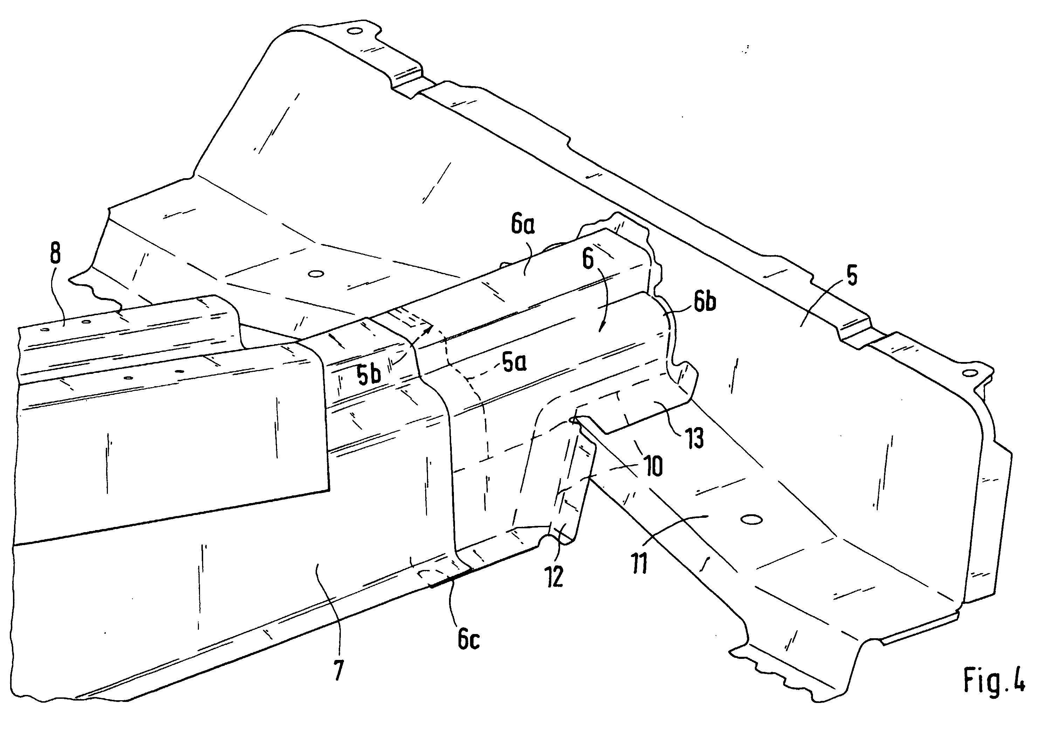

Wie in den Fig. 4 und 7 näher dargestellt ist, weist das innenliegenden Fersenblech 5 den vorgezogenen Halteabschnitt 5a auf, der eine zum Tunnelsegment 6 korrespondierende profilierte Ausbildung aufweist und auf der sich das Tunnelsegment 6 abstützt. Insbesondere weist zur Aufnahme des Tunnelsegments 6 der Halteabschnitt 5a im Kopf ein U-Profil 5b auf, das in dem entsprechenden U-Profil 6a des Tunnelsegments 6 angeordnet ist.

Das obenliegende Fersenblech 4 weist einen dem Querschnitt des Tunnelsegments 6 entsprechenden Ausschnitt 15 auf, welcher das Tunnelsegment 6 umschließt und auch mit diesem verbunden sein kann.

Der Mitteltunnel 7 ist mit seinem freien Ende 7a auf das Tunnelsegment 6 aufgesteckt und mit diesem verbunden. Zur Verstärkung des Mitteltunnels 7 ist dieser mit einer Tunnelverstärkung 8 versehen, die auf dem Mitteltunnel 7 aufsetzbar ist. Anschließend an das freie Ende 7a des Mitteltunnels 7 ist eine Tunnelanschlußverstärkung 9 vorgesehen.

## Patentansprüche

1. Fahrzeug mit einer Bodenaufbaustruktur (1), welche einen in Längsrichtung verlaufenden Mitteltunnel (7) umfaßt, der über Verbindungselemente (4, 5, 6) mit einem Bodenquerträger der Struktur (1) verbunden ist und die Verbindungselemente (4, 5, 6) eine mehrere Kammern umfassende querverlaufende Hohlträgereinheit (H) mit der Bodenaufbaustruktur (1) bilden und ein den Mitteltunnel (7) mit der Hohlträgereinheit (H) verbindendes Tunnelsegment (6) mit seinem einen freien Ende (6b) in der Hohlträgereinheit (H) und mit seinem anderen abgekehrten freien Ende (6c) im Mitteltunnel (7) gehalten ist, wobei die Hohlträgereinheit (H) aus einem unterhalb eines Bodenbleches (3) angeordnetem winkelförmigen Fersenblech (5) mit einem in der Längsmittenebene des Mitteltunnels (7) angeordneten, vorgezogenen profilierten Halteabschnitt (5a) und einen weiteren winkelförmigen Fersenblech (4) besteht, die sowohl über Abstellungen mit der Bodenaufbaustruktur (1) als auch miteinander verbunden sind und das Tunnelsegment (6) aus einem im Querschnitt U-förmigen Profil mit einem im Steg angeordneten vorragenden U-Profilabschnitt (6a) besteht, **dadurch gekennzeichnet, daß** zwischen dem oberen Fersenblech (4) und dem unteren Fersenblech (5) das hintenliegende Bodenblech (3) angeordnet ist und sich zwischen diesem Bodenblech (3) und dem obenliegenden weiteren Fersenblech (4) ein erster Hohlraum (K1) und zwischen dem Bodenblech (3) und dem unteren Fersenblech (5) ein zweiter Hohlraum (K3) und zwischen dem Bodenblech (3) und dem Tunnelsegment (6) ein dritter Hohlraum (K2) ausbildet.

2. Fahrzeug nach Anspruch 1, **dadurch gekennzeichnet, daß** das Tunnelsegment (6) einen winkelförmigen Ausschnitt (10) mit Befestigungslaschen an seinen Schenkeln und an der Stirnfläche zum untenliegenden Fersenblech (5) aufweist und innerhalb eines Ausschnitts (15) des oberen Fersenbleches (4) angeordnet ist, der eine dem Querschnitt des Tunnelsegments (6) entsprechende Form aufweist.

3. Fahrzeug nach einem oder mehreren der vorhergehenden Ansprüche, **dadurch gekennzeichnet, daß** der vorgezogene profilierte Halteabschnitt (5a) des unteren Fersenbleches (5) eine der Profilierung des Tunnelsegments (6) entsprechende Profilierung aufweist und formschlüssig innerhalb des Tunnelsegments (6) angeordnet ist.

4. Fahrzeug nach einem oder mehreren der vorhergehenden Ansprüche, **dadurch gekennzeichnet, daß** der Mitteltunnel (7) mit einer aufgesetzten profilierten Verstärkung (8) verbunden ist, an die sich ein Tunnelanschlußverstärkungsteil (9) anschließt, das am oberen Fersenblech (4) endet.

## Claims

1. A vehicle with a floor structure (1) comprising a central tunnel (7) which extends in the longitudinal direction and which is connected to a transverse floor support of the structure (1) by way of connecting elements (4, 5, 6), and the connecting elements (4, 5, 6) form with the floor structure (1) a transversely extending hollow support unit (**H**) comprising a plurality of chambers, and a tunnel segment (6) connecting the central tunnel (7) to the hollow support unit (**H**) is held with one (6b) of its free ends in the hollow support unit (**H**) and with its other free end (6c) facing away in the central tunnel (7), wherein the hollow support unit (**H**) comprises an angled heel plate (5) arranged below a floor plate (3) and having an advanced profiled holding portion (5a) arranged in the longitudinal central plane of the central tunnel (7) and a further angled heel plate (4), which heal plates (4, 5) are connected both to the floor structure (1) by way of projecting portions and to each other, and the tunnel segment (6) comprises a profiled member of U-shaped cross-section with a projecting U-profile portion (6a) arranged in the web, **characterized in that** the floor plate (3) situated at the rear is arranged between the upper heel plate (4) and the lower heel plate (5), and a first cavity (**K1**) is formed between the said floor plate (3) and the further heel plate (4) situated above and a second cavity (**K3**) is formed between the floor plate (3) and the lower heel plate (5) and a third cavity (**K2**) is formed between the floor plate (3) and the tunnel segment (6).

2. A vehicle according to Claim 1, **characterized in that** the tunnel segment (6) has an angled cut-away portion (10) with fastening plates on its side members and on the end face towards the heel plate (5) situated below and it is situated inside a cut-away portion (15) of the upper heel plate (4) which has a shape corresponding to the cross-section of the tunnel segment (6).

3. A vehicle according to one or more of the preceding Claims, **characterized in that** the advanced profiled holding portion (5a) of the lower heel plate (5) has a profiling corresponding to the profiling of the tunnel segment (6) and is arranged with positive locking inside the tunnel segment (6).

4. A vehicle according to one or more of the preceding Claims, **characterized in that** the central tunnel (7) is connected to a mounted profiled reinforcement (8) to which a tunnel-connexion reinforcement part (9) is attached which terminates at the upper heel plate (4).

## Revendications

1. Véhicule avec une structure de carrosserie de plancher (1) qui comprend un tunnel central (7) s'étendant dans la direction longitudinale, lequel est relié, par des éléments de liaison (4, 5, 6), à une traverse de plancher de la structure (1), et les éléments de liaison (4, 5, 6) forment une unité à poutre creuse (H) s'étendant transversalement, comprenant plusieurs chambres, avec la structure de plancher (1), et un segment de tunnel (6), reliant le tunnel central (7) à l'unité de poutre creuse (H), est maintenu, par son autre extrémité libre (6c) opposée, dans le tunnel central (7), l'unité de poutre creuse (H) étant constituée d'une tôle de talon (5) de forme angulaire, disposée au-dessous d'une tôle de plancher (3), avec un tronçon de maintien (5a) profilé étiré, disposé dans le plan médian longitudinal du tunnel central (7), et d'une autre tôle de talon (4) de forme angulaire, qui sont reliées, par des parties saillantes, à la structure de plancher (1) ainsi qu'entre elles, et le segment de tunnel (6) est constitué d'un profilé de section transversale en U avec un tronçon de profilé en U (6a) saillant, disposé dans le dos du U, **caractérisé en ce que** la tôle de plancher (3) située à l'arrière est disposée entre la tôle de talon supérieure (4) et la tôle de talon inférieure (5), et entre cette tôle de plancher (3) et l'autre tôle de talon (4) située à la partie supérieure il est formé une première cavité (K1) et entre la tôle de plancher (3) et la tôle de talon inférieure (5), une autre cavité (K3) et entre la tôle de plancher (3) et le segment de tunnel (6), une troisième cavité (K2).

2. Véhicule selon la revendication 1, **caractérisé en ce que** le segment de tunnel (6) présente une découpe (10) de forme angulaire avec des pattes de fixation sur ses côtés et sur la surface frontale vers la tôle de talon (5) située à la partie inférieure, et est disposé à l'intérieur d'une découpe (15) de la tôle de talon supérieure (4), qui présente une forme correspondant à la section transversale du segment de tunnel (6).

3. Véhicule selon une ou plusieurs des revendications précédentes, **caractérisé en ce que** le tronçon de maintien (5a) profilé avancé de la tôle de talon inférieure (5) présente un profilage correspondant au profilage du segment de tunnel (6) et est disposé, par complémentarité de forme, à l'intérieur du segment de tunnel (6).

4. Véhicule selon une ou plusieurs des revendications précédentes, **caractérisé en ce que** le tunnel central (7) est relié à un renfort (8) profilé placé dessus, auquel se raccorde une partie de renfort (9) de raccord au tunnel qui se termine sur la tôle de talon supérieure (4).
